# EUROPÄISCHE PATENTSCHRIFT

(11) **EP 3 123 028 B1**
(45) Veröffentlichungstag und Bekanntmachung des Hinweises auf die Patenterteilung: **29.08.2018**
(21) Anmeldenummer: 15711499.2
(22) Anmeldetag: 20.03.2015
(51) Int. Cl.: F04C 5/00, F01N 3/20, F04B 43/12

(54) **VERFAHREN ZUM BETRIEB EINER PUMPE**
METHOD FOR OPERATING A PUMP
PROCÉDÉ POUR FAIRE FONCTIONNER UNE POMPE

(30) Priorität: 26.03.2014 EP 14290078
(43) Veröffentlichungstag der Anmeldung: 01.02.2017
(73) Patentinhaber: Continental Automotive GmbH, 30165 Hannover (DE)
(72) Erfinder: HODGSON, Jan, 53840 Troisdorf (DE); MAGUIN, Georges, F-57155 Marly (FR); KOPP, Yves, F-57510 Remering-les-Puttelange (FR)
(86) Internationale Anmeldenummer: PCT/EP2015/055869
(87) Internationale Veröffentlichungsnummer: WO 2015/144570

(56) Entgegenhaltungen:
- WO-A1-2011/120839
- WO-A1-2012/126544
- WO-A1-2013/057178

## Beschreibung

Die Erfindung betrifft ein Verfahren zum Betrieb einer Pumpe zur Förderung einer Flüssigkeit, sowie eine Pumpe zur Durchführung des Verfahrens. Das Verfahren kann insbesondere zum Betrieb einer Pumpe verwendet werden, die in einem Kraftfahrzeug dazu dient, ein flüssiges Additiv zur Abgasreinigung in die Abgasbehandlungsvorrichtung des Kraftfahrzeugs zu fördern. Abgasbehandlungsvorrichtungen zur Reinigung der Abgase von Verbrennungskraftmaschinen, in welchen ein flüssiges Additiv zur Abgasreinigung eingesetzt wird, sind weit verbreitet. Flüssige Additive werden in Abgasbehandlungsvorrichtungen insbesondere dazu benötigt, um Stickstoffoxidverbindungen im Abgas der Verbrennungskraftmaschine wirkungsvoll zu reduzieren. Das dabei durchgeführte Abgasreinigungsverfahren wird als SCR-Verfahren (SCR-Verfahren, SCR = Selective Catalytic Reduction) bezeichnet.
Als flüssiges Additiv für das SCR-Verfahren wird üblicherweise Harnstoff-Wasser-Lösung verwendet. Eine besonders häufig für die Abgasbehandlung eingesetzte Harnstoff-Wasser-Lösung mit einem Harnstoffgehalt von 32,5 % ist beispielsweise unter dem Handelsnamen AdBlue® erhältlich. Für das SCR-Verfahren wird diese Harnstoff-Wasser-Lösung dann extern in einem eigens dafür vorgesehenen Reaktor oder abgasintern innerhalb der Abgasbehandlungsvorrichtung in Ammoniak umgesetzt. Die Reaktion von Stickstoffoxidverbindungen im Abgas zu unschädlichen Substanzen findet dann mit Hilfe des Ammoniaks statt. Problematisch bei der Förderung von flüssigem Additiv in einer Abgasbehandlungsvorrichtung ist, dass das flüssige Additiv bei niedrigen Temperaturen einfrieren kann. AdBlue® friert beispielsweise bei Temperaturen von -11 °C ein. Temperaturen von unter -11 °C können insbesondere im Winter während langer Stillstandsphasen eines Kraftfahrzeuges auftreten. Eine Vorrichtung zur Förderung und Bereitstellung von derartiger Harnstoff-Wasser-Lösung an eine Abgasbehandlungsvorrichtung muss so ausgelegt sein, dass sie durch einfrierendes flüssiges Additiv nicht beeinträchtigt werden kann.

Darüber hinaus ist die Genauigkeit der Dosierung des flüssigen Additivs für die Abgasbehandlungsvorrichtung eine wichtige Anforderung. Dies liegt daran, dass für eine bestimmte vorliegende Menge an Verunreinigungen im Abgas zur Abgasbehandlung jeweils eine bestimmte Menge an flüssigem Additiv benötigt wird. Diese Menge muss der Abgasbehandlungsvorrichtung möglichst genau zugeführt werden. Eine Überdosierung von flüssigem Additiv kann beispielsweise zum Austritt von flüssigem Additiv aus der Abgasbehandlungsvorrichtung führen. Darüber hinaus bewirkt eine Überdosierung einen höheren Verbrauch an flüssigem Additiv. Ein höherer Verbrauch an flüssigem Additiv ist regelmäßig nachteilig, weil das flüssige Additiv einerseits Kosten verursacht und andererseits ein Tank zur Speicherung des flüssigen Additivs in einem Kraftfahrzeug häufiger nachgefüllt ober größer dimensioniert werden muss. Außerdem besteht auch die Gefahr einer Unterdosierung von flüssigem Additiv, wenn die Förderung und Bereitstellung des flüssigen Additivs nicht mit einer ausreichenden Genauigkeit erfolgt. Bei einer Unterdosierung ist es möglich, dass Schadstoffbestandteile im Abgas nicht entfernt werden und aus der Abgasbehandlungsvorrichtung ungereinigt austreten können.

Ausgehend von dieser Ausgangslage ist es Aufgabe der hier vorliegenden Erfindung, die geschilderten technischen Probleme zu lösen bzw. zumindest zu lindern. Dies wird insbesondere durch ein Verfahren zum Betrieb einer Pumpe zur Förderung einer Flüssigkeit und durch eine Pumpe zur Förderung einer Flüssigkeit gemäß der folgenden Beschreibung gelöst. Es ist darauf hinzuweisen, dass die im Folgenden erläuterten Ausführungsbeispiele des Verfahrens und der Pumpe in beliebiger, technologisch sinnvoller Weise miteinander kombiniert werden können und dabei weitere Ausführungsbeispiele der Pumpe aufzeigen.

Die Erfindung betrifft ein Verfahren zum Betrieb einer Pumpe zur Förderung einer Flüssigkeit, aufweisend zumindest ein Pumpengehäuse mit mindestens einem Einlass und mindestens einem Auslass, wobei an dem Pumpengehäuse ein Exzenter angeordnet ist, der um eine Achse relativ zu dem Pumpengehäuse drehbar ist, wobei zwischen dem Pumpengehäuse und dem Exzenter ein verformbares Element angeordnet ist und wobei mit dem verformbaren Element und dem Pumpengehäuse ein Förderkanal von dem mindestens einen Einlass zu dem mindestens einen Auslass ausgebildet ist und wobei weiter das verformbare Element von dem Exzenter abschnittsweise derart gegen das Pumpengehäuse gedrückt wird, dass mindestens eine verschiebbare Abdichtung des Förderkanal und zumindest ein geschlossenes Pumpenvolumen in dem Förderkanal ausgebildet sind, welche zur Förderung der Flüssigkeit durch eine Drehbewegung des Exzenters entlang des Förderkanals von dem Einlass zu dem Auslass verschiebbar sind und das Verfahren zumindest die folgenden Schritte umfasst:
a) Festlegen einer Flüssigkeitsmenge, die mit der Pumpe gefördert werden soll,
b) Bestimmen einer Temperatur des verformbaren Elementes,
c) Bestimmen mindestens eines Parameters unter Berücksichtigung der Temperatur aus Schritt b), wobei der Parameter eine Abhängigkeit zwischen der Bewegung des Exzenters und der Förderleistung der Pumpe wiedergibt,
d) Fördern der in Schritt a) festgelegten Flüssigkeitsmenge, wobei eine Betriebsweise der Pumpe unter Berücksichtigung des Parameters aus Schritt c) angepasst wird.

Der beschriebene Pumpentyp wird auch als Orbitalpumpe bezeichnet. Der grundsätzliche Aufbau dieses Pumpentyps ist beispielsweise aus den Druckschriften US 2,544,628, US 3,408,947, DE 285 39 16 A1 und DE 381 52 52 A1 bekannt.

Aus der WO2013/057178 ist ein Verfahren zur Betrieb einer Pumpe in einer Abgasreinigungsanlage bekannt.

In der WO2012/126544 wird eine Orbitalpumpe für ein Dosiersystem einer Abgasreinigungsanlage offenbart.

Die Pumpe weist eine (zentrale) Achse auf, um die herum der Exzenter gedreht werden kann. Dafür verläuft vorzugsweise entlang der Antriebsachse eine Antriebswelle, die den Exzenter mit einem (elektrisch betreibbaren) Antrieb verbindet. Der Antrieb ist vorzugsweise entlang der Achse oberhalb und/oder unterhalb des Pumpengehäuses angeordnet. Zur räumlichen Beschreibung der Pumpe und ihrer Komponenten wird im Folgenden eine radiale Richtung angenommen, die senkrecht auf der Achse der Pumpe steht und sich ausgehend von der Achse der Pumpe in radialer Richtung nach außen erstreckt. Senkrecht zu der radialen Richtung und tangential zu der Achse soll eine Umfangsrichtung definiert werden. Der Förderkanal verläuft von dem Einlass und zu dem Auslass der Pumpe zumindest abschnittsweise entlang dieser Umfangsrichtung durch das Pumpengehäuse bzw. entlang der Umfangsfläche des Pumpengehäuses. Zur weiteren Beschreibung der Pumpe wird auch eine Mittelebene der Pumpe definiert. Diese Mittelebene ist senkrecht zu der Achse angeordnet. In der Mittelebene liegen das Pumpengehäuse, der Exzenter, das verformbare Element und der Förderkanal.

Das Pumpengehäuse der Pumpe ist vorzugsweise nach Art eines Rings oder einer zylindrischen Kammer aufgebaut, worin der Exzenter innen angeordnet ist. Die Umfangsfläche des Pumpengehäuses ist insbesondere eine Innenumfangsfläche. Die Umfangsfläche des Pumpengehäuse ist vorzugsweise (zumindest größtenteils) rotationssymmetrisch zu der Achse der (zentralen) Achse der Pumpe ausgebildet. Das Pumpengehäuse kann auch als (äußerer) Stator der Pumpe angesehen werden, wobei der Exzenter als (innerer) Rotor bezeichnet wird. Gemäß einer weiteren Ausführungsform der Pumpe ist es möglich, dass das Pumpengehäuse einen inneren Stator bildet, welcher von dem Exzenter umgeben ist. Dann bildet der Exzenter einen äußeren Rotor. Der Einlass und der Auslass sind an dem Pumpengehäuse angeordnet und ermöglichen das Einströmen und das Ausströmen der Flüssigkeit in das Pumpengehäuse bzw. in den Förderkanal. Das Pumpengehäuse ist vorzugsweise aus Kunststoff. In dem Pumpengehäuse können Versteifungsstrukturen integriert sein. In einer bevorzugten Ausführungsvariante ist in einem Pumpengehäuse aus Kunststoff eine ringförmige metallische Einlage integriert, die das Pumpengehäuse versteift.

Mit dem Begriff "Exzenter" ist hier insbesondere eine kreisförmige Struktur gemeint, die exzentrisch (außermittig) zu der Achse angeordnet ist und durch eine Drehung um die Achse herum eine exzentrische Bewegung durchführt. Zwischen dem Pumpengehäuse und dem Exzenter ist ein ringförmiger bzw. umlaufender Spalt gebildet, in dem das verformbare Element angeordnet ist. Der Förderkanal ist (innerhalb des Spalts) zwischen dem verformbaren Element und dem Pumpengehäuse angeordnet und wird von dem Pumpengehäuse und dem verformbaren Element begrenzt. Der Spalt hat mindestens eine Engstelle, die sich durch eine Drehung des Exzenters entlang des Pumpengehäuses bzw. entlang des Förderwegs verschiebt. An der Engstelle ist das verformbare Element gegen das Gehäuse gedrückt, so dass dort die verschiebbare Abdichtung gebildet ist. Der Begriff "Exzenter" erfasst auch sogenannte mehrteilige Exzenter, die mehrere Engstellen des Spalts zwischen dem Pumpengehäuse und dem Exzenter ausbilden. Solche mehrteiligen Exzenter sind besonders bevorzugt als Rollenexzenter ausgebildet. Ein solcher Exzenter hat eine Mehrzahl von Rollen, die auf dem verformbaren Element abrollen und jeweils die Engstellen ausbilden.

Der Förderkanal hat zwischen dem Pumpengehäuse und dem verformbaren Element einen für Flüssigkeit durchströmbaren Kanalquerschnitt, der beispielsweise (je nach Größe der Pumpe) an der größten Stelle zwischen 1 mm² [Quadratmillimeter] und 50 mm² betragen kann.

Der Förderkanal ist ringförmig bzw. umlaufend um die Achse ausgebildet. Der Einlass und der Auslass sind in einer Förderrichtung der Pumpe vorzugsweise mit einem Winkelabstand von mehr als 270° zueinander (gemessen in der Mittelebene) angeordnet. Entgegen der Förderrichtung haben der Einlass und der Auslass damit einen Winkelabstand von weniger als 90° zueinander.

Der Exzenter ist vorzugsweise mehrteilig ausgeführt. Der Exzenter weist vorzugsweise einen inneren Bereich auf, welcher eine exzentrische Drehbewegung ausführt. Zusätzlich kann ein äußerer Lagerring vorgesehen sein, welcher den inneren Bereich umgibt. Zwischen dem inneren Bereich und dem äußeren Lagerring befindet sich vorzugsweise mindestens ein Lager. Dieses Lager kann ein Kugellager oder ein Rollenlager sein. Der innere Exzenterbereich des Exzenters führt im Betrieb eine Drehbewegung um die Achse aus. Aufgrund der exzentrischen Anordnung und ggf. auch aufgrund der äußeren Form des Exzenters ergibt sich eine exzentrische Bewegung einer Oberfläche des Exzenters. Diese exzentrische Bewegung wird auf den äußeren Lagerring übertragen. Durch ein Lager zwischen dem inneren Bereich und einem Lagerring kann eine exzentrische Drehbewegung des inneren Bereichs in eine exzentrische Taumelbewegung des Lagerrings umgewandelt werden, ohne dass der Drehbewegungsanteil der Bewegung des inneren Bereichs mitübertagen wird. Die Tatsache, dass die Bewegung des Lagerrings keinen Drehbewegungsanteil aufweist, ermöglicht es, Schubspannungen in dem verformbaren Element und innere Reibungskräfte der Pumpe zu reduzieren. Das verformbare Element wird durch die Bewegung des Exzenters gewalkt. An einer Kontaktfläche des Exzenters und des verformbaren Elements wirken vorzugsweise nur Druckkräfte und im Wesentlichen keine Reibungskräfte. Eine entsprechende Aufteilung des Exzenters in einen inneren Exzenterbereich und einen Lagerring ist auch möglich, wenn der Exzenter ein äußerer Rotor ist, der um ein (inneres) Pumpengehäuse herum angeordnet ist. Es ist auch möglich, dass auf den äußeren Lagerring verzichtet wird und die Rollen des Lagers unmittelbar auf bzw. an dem verformbaren Element abrollen.

Das verformbare Element ist vorzugsweise derart zwischen dem Exzenter und dem Pumpengehäuse angeordnet, dass der Exzenter das verformbare Element bereichsweise derart gegen bzw. an das Pumpengehäuse drückt, dass damit die mindestens eine verschiebbare Abdichtung ausgebildet ist. An der Abdichtung existiert ein (linienförmiger oder flächiger) Kontakt zwischen dem verformbaren Element und dem Pumpengehäuse, der von der Flüssigkeit nicht durchströmt werden kann. Anders ausgedrückt liegt das verformbare Element vollständig an dem Pumpengehäuse an, so dass der Kanalquerschnitt im Bereich dieser verschiebbaren Abdichtung keine Querschnittsfläche hat. Der Förderkanal ist demnach im Bereich der verschiebbaren Abdichtung unterbrochen. Damit ist innerhalb des Förderkanals auch mindestens ein geschlossenes Pumpenvolumen gebildet. Mit einem geschlossenen Pumpenvolumen ist gemeint, dass ein zumindest einseitig verschlossener Abschnitt des Förderkanals existiert. Durch eine Verschiebung der verschiebbaren Abdichtung wird auch das mindestens eine geschlossene Pumpenvolumen verschoben, so dass die Flüssigkeit, die sich in dem geschlossenen Pumpenvolumen befindet, gefördert wird. Vorzugsweise werden bei dem Betrieb der Pumpe mehrere geschlossene Pumpenvolumina von dem Einlass der Pumpe zu dem Auslass der Pumpe verschoben, um die Flüssigkeit zu fördern. Damit wird ein geschlossenes Pumpenvolumen in der Nähe des Einlasses ausgebildet (definiert zumindest einseitig verschlossen) und dann am Auslass aufgelöst (definiert zumindest einseitig wieder geöffnet). An dem Einlass ist ein geschlossenes Pumpenvolumen nur einseitig stromab durch eine verschiebbare Abdichtung verschlossen und stromauf mit dem Einlass verbunden, so dass Flüssigkeit durch den Einlass in das geschlossene Pumpenvolumen einströmen kann. An dem Auslass ist das geschlossene Pumpenvolumen (nur noch) einseitig allerdings stromauf durch eine Abdichtung verschlossen und stromab mit dem Auslass verbunden, so dass die Flüssigkeit durch den Auslass aus dem geschlossenen Pumpenvolumen ausströmen kann. Dazwischen existiert (auf dem Weg des geschlossenen Pumpenvolumens von dem Einlass zu dem Auslass) eine Phase, in der das geschlossene Pumpenvolumen stromaufwärts und stromabwärts durch die mindestens eine verschiebbare Abdichtung verschlossen ist.

Das verformbare Element kann auch als verformbare Membran bezeichnet werden. Mit dem Begriff "Membran" ist hier keine zwingende Aussage darüber getroffen, ob das verformbare Element eine flächige Ausdehnung hat. Der Begriff "Membran" soll als Hinweis verstanden werden, dass es sich bei dem verformbaren Element um eine flexible Struktur handelt, die zur Förderung von Flüssigkeit verformt werden kann. Als Material für das verformbare Element bzw. die verformbare Membran wird vorzugsweise ein Elastomermaterial (beispielsweise Kautschuk oder Latex) verwendet. Zur Erhöhung der Haltbarkeit und/oder zur Herstellung und Aufrechterhaltung der Flexibilität kann das Material des verformbaren Elements Zusatzstoffe enthalten. Vorzugsweise ist das verformbare Element in alle Richtungen (in axialer Richtung, in radialer Richtung und in Umfangsrichtung) flexibel. Es ist allerdings auch möglich, dass das verformbare Element eine teilweise gerichtete Flexibilität hat. Beispielsweise kann es eine höhere Flexibilität in radialer Richtung als in Umfangsrichtung und in axialer Richtung aufweisen. Ein Verformen des verformbaren Elements in einer Richtung bedingt typischerweise auch eine Verformung in andere Richtungen. Das verformbare Element dehnt sich beispielsweise in axialer Richtung und/oder in Umfangsrichtung aus, wenn es in radialer Richtung zusammengedrückt wird.

An der Pumpe ist vorzugsweise auch eine stationäre Abdichtung vorgesehen, die eine nicht gewollte Rückströmung der Flüssigkeit von dem Auslass zu dem Einlass (entgegen der Förderrichtung) verhindert. Die stationäre Abdichtung kann ortsfest mit dem Pumpengehäuse bereitgestellt werden und zwischen dem Auslass und dem Einlass positioniert sein. Das verformbare Element kann im Bereich der stationären Abdichtung beispielsweise an dem Pumpengehäuse angeklemmt oder angeklebt sein, um eine fluiddichte Abdichtung zwischen dem Pumpengehäuse und dem verformbaren Element dauerhaft zu gewährleisten. Die stationäre Abdichtung ist unabhängig von der Position des Exzenters fluiddicht.

Mit der Pumpe ist vorzugsweise eine Förderung von Flüssigkeit in Förderrichtung von dem Einlass zu dem Auslass möglich. Durch eine Umkehr der Drehrichtung des Exzenters ist gegebenenfalls auch eine Umkehr der Förderrichtung (anstatt vom Einlass zum Auslass, umgekehrt vom Auslass zurück zum Einlass) möglich.

Der Schritt a) definiert beispielsweise die Festlegung einer Dosieranforderung in einem Steuergerät. Ein Steuergerät ermittelt beispielsweise eine Flüssigkeitsmenge, die mit der Pumpe gefördert werden soll, in Abhängigkeit von bestimmten Betriebsbedingungen einer Verbrennungskraftmaschine und/oder in Abhängigkeit von bestimmten Parametern in einer Abgasbehandlungsvorrichtung. Die Flüssigkeitsmenge wird in Schritt a) beispielsweise aus einer NOx-Menge (Menge an Stickstoffoxidverbindungen) im Abgas berechnet.

Die Bestimmung der Temperatur des verformbaren Elements in Schritt b) kann beispielsweise direkt mit Hilfe eines Temperatursensors an dem verformbaren Element oder in dem verformbaren Element erfolgen. Alternativ oder zusätzlich kann die Temperatur indirekt über eine Schätzung oder eine Berechnung erfolgen. Dazu kann ein Temperatursensor indirekt (beispielsweise über ein Pumpengehäuse der Pumpe oder den Exzenter der Pumpe) mit dem verformbaren Element in Kontakt stehen.

Der Schritt c) wird üblicherweise in einem Steuergerät durchgeführt. Der in Schritt c) bestimmte Parameter kann beispielsweise anhand eines Kennfelds unter Berücksichtigung der Temperatur aus Schritt b) berechnet werden. Der Parameter dient zur Kompensation einer Veränderung der Förderleistung oder der Fördermenge der Pumpe in Abhängigkeit der Temperatur. Beispielsweise kann in einem Kennfeld die Information hinterlegt sein, dass bei einer Drehbewegung des Exzenters um einen bestimmten Drehwinkel (z. B. 20 Winkelgrad) üblicherweise eine bekannte Menge an flüssigem Additiv gefördert wird. Gleichzeitig kann in dem Kennfeld hinterlegt sein, dass bei einer erhöhten Temperatur diese Fördermenge bei gleicher Drehbewegung des Exzenters sinkt. Diese Information findet in dem in Schritt c) bestimmten Parameter Ausdruck.

In Schritt d) wird der in Schritt c) ermittelte Parameter verwendet, um einen angepassten Betrieb der Pumpe unter Berücksichtigung des Parameters durchzuführen. Hiermit ist es möglich, die Pumpe auch bei wechselnden Temperaturen dosiergenau zu betreiben.

Das Verfahren ist außerdem vorteilhaft, wenn vor Schritt c) eine Winkelposition des Exzenters ermittelt und diese Winkelposition bei der Bestimmung des mindestens einen Parameters in Schritt c) berücksichtigt wird.

Mit einer Winkelposition des Exzenters ist in diesem Zusammenhang die Winkelposition einer Engstelle zwischen dem Pumpengehäuse und dem Exzenter gemeint, an welcher das verformbare Element an das Pumpengehäuse angedrückt ist und die stationäre Abdichtung ausgebildet ist. Häufig ändert sich ein Zusammenhang zwischen der Förderleistung der Pumpe in Abhängigkeit der Winkelposition des Exzenters innerhalb der Pumpe. Weiter oben ist eine stationäre Abdichtung der Pumpe beschrieben. Im Bereich dieser stationären Abdichtung bewirkt eine Drehbewegung des Exzenters um einen bestimmten Drehwinkel (z. B. 20 Winkelgrad) eine erheblich kleinere Fördermenge als bei Anwendung des gleichen Drehwinkels, wenn der Exzenter gegenüberliegend zur stationären Abdichtung positioniert ist. Dies liegt daran, dass der Exzenter im Bereich der stationären Abdichtung keinen wesentlichen Einfluss auf die Form und die Ausbildung des Förderkanals und der beweglichen Abdichtung in der Pumpe hat. Die Berücksichtigung der Winkelposition des Exzenters in dem beschriebenen Verfahren verbessert die Förder- und Dosiergenauigkeit der Pumpe noch einmal.

Weiterhin vorteilhaft ist das Verfahren, wenn bei der Bestimmung des mindestens einen Parameters in Schritt c) die in Schritt a) festgelegte Flüssigkeitsmenge berücksichtigt wird.

Die Festlegung der Flüssigkeitsmenge ist beispielsweise deswegen wichtig, weil der Winkelabschnitt, um welchen der Exzenter zur Förderung der festgelegten Flüssigkeitsmenge weiterbewegt wird, in Abhängigkeit der festgelegten Flüssigkeitsmenge unterschiedlich ist. Beispielsweise ist es möglich, dass bei großen Flüssigkeitsmengen der Exzenter einmal oder sogar mehrmals an der weiter oben beschriebenen stationären Abdichtung passieren muss. Dies kann den Zusammenhang zwischen der Bewegung des Exzenters und der Fördermenge beeinflussen. Auch die Berücksichtigung dieses Zusammenhangs erhöht die Fördergenauigkeit und die Dosiergenauigkeit der Pumpe weiter.

Weiterhin vorteilhaft ist das Verfahren, wenn die Temperatur des verformbaren Elements in Schritt b) mit einem Energiemodell berechnet wird.

Im Rahmen eines Energiemodells kann beispielsweise die insgesamt bereits in das verformbare Element hinein fließende Menge an thermischer Energie berücksichtigt werden, um daraus auf die Temperatur des verformbaren Elements zu schließen. Die insgesamt in das verformbare Element eingebrachte Energiemenge hängt beispielsweise von der Verlustleistung der Pumpe beim Fördern des flüssigen Additivs ab. Diese Verlustleistung kann beispielsweise durch die Drehzahl der Pumpe, die bereits erfolgte Anzahl an Pumpenumdrehungen und/oder die Dauer einer Pause in der Förderung mit der Pumpe beeinflusst sein. Die Verlustleistung entsteht insbesondere durch Walkarbeit bzw. Verformungsarbeit in dem verformbaren Element. Verlustleistung entsteht auch durch Abwärme des (elektrischen) Antriebs der Pumpe. Bei der Berechnung der Verlustleistung kann auch die von der Pumpe verbrauchte elektrische Antriebsenergie berücksichtigt werden.

Gleichzeitig kann auch ein Energieabfluss von Wärmeenergie aus der Pumpe berücksichtigt werden. Dieser Energieabfluss geschieht einerseits über die Flüssigkeit, die in die Pumpe hinein und aus der Pumpe herausgefördert wird. Regelmäßig ist die in die Pumpe einströmende Flüssigkeit kühler als die aus der Pumpe austretende Flüssigkeit, so dass sich über die Flüssigkeit in der Summe ein Energieaustrag aus der Pumpe hinaus ergibt. Außerdem strahlt die Pumpe Wärmeenergie ab. Gleichzeitig findet auch Wärmeleitung aus der Pumpe hinaus statt, die höher ist je höher die Temperatur der Pumpe ist. Es ist allerdings auch möglich, dass thermische Energie von außen in die Pumpe hinein fließt, beispielsweise wenn die Pumpe, eine Vorrichtung in der die Pumpe enthalten ist oder ein Flüssigkeitspump in der Nähe der Pumpe beheizt werden und Wärme an die Pumpe übertragen.

Die genannten in die Pumpe einfließenden Mengen an thermischer Energie sowie die genannten Energieabflüsse können berücksichtigt werden, um die Temperatur des verformbaren Elements zu schätzen. Dies stellt eine besonders kostengünstige Möglichkeit dar, eine Information über die Temperatur des verformbaren Elements zu erhalten. Die Erfindung betrifft auch eine Pumpe zur Förderung einer Flüssigkeit, die zur Durchführung des beschriebenen Verfahrens eingerichtet ist, aufweisend zumindest ein Pumpengehäuse mit mindestens einem Einlass und mindestens einem Auslass, wobei an dem Pumpengehäuse ein Exzenter angeordnet ist, der um eine Achse relativ zu dem Pumpengehäuse drehbar ist, wobei zwischen dem Pumpengehäuse und dem Exzenter ein verformbares Element angeordnet ist und wobei mit dem verformbaren Element und einer zylindrischen Umfangsfläche des Pumpengehäuses ein Förderkanal von dem mindestens einen Einlass zu dem mindestens einen Auslass ausgebildet ist und wobei weiter das verformbare Element von dem Exzenter abschnittsweise derart gegen das Pumpengehäuse gedrückt wird, so dass mindestens eine verschiebbare Abdichtung des Förderkanal und zumindest ein geschlossenes Pumpenvolumen in dem Förderkanal ausgebildet sind, die zur Förderung der Flüssigkeit durch eine Drehbewegung des Exzenters entlang des Förderkanals von dem Einlass zu dem Auslass verschiebbar sind, wobei die Pumpe zumindest einen Temperatursensor zur Bestimmung der Temperatur des verformbaren Elements in Schritt b) aufweist.
Die weiter vorne im Zusammenhang mit dem beschriebenen Verfahren beschriebenen besonderen Merkmale einer Pumpe können auf die beschriebene Pumpe entsprechend angewendet werden.
Der Temperatursensor zur Bestimmung der Temperatur dient insbesondere zur Durchführung des Schritts b) des beschriebenen Verfahrens.
Besonders vorteilhaft ist die Pumpe, wenn der mindestens eine Temperatursensor einen Infrarotsensor umfasst, der eine von dem verformbaren Element ausgehende Wärmestrahlung erfasst.
Ein solcher Infrarotsensor kann beabstandet von dem verformbaren Element angeordnet sein und trotzdem direkt eine Temperatur des verformbaren Elements messen. Ein Infrarotsensor ist daher für das beschriebene Verfahren und die Pumpe besonders geeignet. Der Infrarotsensor misst die Temperatur des verformbaren Elementes vorzugsweise an einem Messpunkt an dem verformbaren Element, wobei die Temperatur des Messpunktes für die gesamte Temperatur (mittlere Temperatur) des verformbaren Elementes repräsentativ ist. Der Messpunkt kann beispielsweise an einer besonders zentralen Stelle des verformbaren Elementes angeordnet sein, beispielsweise in einem Kanal, der sich in das verformbare Element hinein erstreckt. In einer anderen Ausführungsvariante kann der Messpunkt mit Wärmeleitelementen verbunden sein, welche die Wärme des verformbaren Elementes zu dem Messpunkt lenken. Wärmeleitelemente können beispielsweise (metallische) Einlagen in dem verformbaren Element sein.

Besonders vorteilhaft ist die Pumpe, wenn durch das Pumpengehäuse ein Strahlungskanal verläuft, entlang welchem die Wärmestrahlung von dem verformbaren Element zu dem Infrarotsensor gelangt.

Ein Strahlungskanal kann beispielsweise durch eine Bohrung in dem Pumpengehäuse ausgeführt sein, durch welchen die Wärmestrahlung von dem verformbaren Element zu dem Infrarotsensor gelangen kann. Der Strahlungskanal kann sich auch teilweise durch das verformbare Element erstrecken, beispielsweise in Form eines Kanals, an dessen Ende sich der Messpunkt befindet. Ein Strahlungskanal kann beispielsweise auch durch einen Spalt zwischen dem Exzenter und dem verformbaren Element gebildet sein. Ein Strahlungskanal kann geradlinig verlaufen. Es ist auch möglich, dass der Strahlungskanal einmal oder mehrmals abknickt, bzw. umgelenkt wird, wobei innerhalb des Strahlungskanals dann mindestens ein Umlenkmittel vorgesehen ist, mit welchem Wärmestrahlung entlang des Strahlungskanals gelenkt werden kann.

Weiterhin vorteilhaft ist die Pumpe, wenn der mindestens eine Temperatursensor ein Thermoelement umfasst, das mit dem verformbaren Element in Kontakt ist.

Die Temperaturmessung mit Thermoelementen basiert auf dem Seebeck-Effekt. Ein Thermoelement kann beispielsweise an der Oberfläche des verformbaren Elements angeordnet sein oder kann sich in das verformbare Element hinein erstrecken. Ein Thermoelement hat vorzugsweise einen Messpunkt, an welchem zwei elektrische Leiter aus verschiedenen metallischen Materialien miteinander verbunden sind. Dieser Messpunkt ist vorzugsweise innerhalb oder unmittelbar an dem verformbaren Element angeordnet. Als zwei verschiedene metallische Materialien können beispielsweise Kupfer und eine Kupfer-Nickel-Legierung oder Eisen und eine Kupfer-Nickel-Legierung verwendet werden. Zusätzlich ist regelmäßig eine Vergleichsmessstelle notwendig, wobei die Temperatur der Vergleichsmessstelle bekannt sein muss, damit die Messung mit dem Thermoelement erfolgen kann. Die Vergleichsmessstelle kann beispielsweise an einer Leitung angeordnet sein, die mit flüssigem Additiv gefüllt ist, wobei die Temperatur des flüssigen Additivs an der Vergleichsmessstelle vorzugsweise mit einem weiteren Temperatursensor überwacht werden kann.

Weiterhin vorteilhaft ist die Pumpe, wenn der mindestens eine Temperatursensor einen Messwiderstand umfasst, der innerhalb des verformbaren Elements angepasst ist.

Die Temperaturmessung mit einem Messwiderstand basiert auf der Temperaturabhängigkeit des elektrischen Widerstands bei verschiedenen Leitermaterialien. Als Material für einen Messwiderstand können hier beispielsweise Platin-Messwiderstände verwendet werden. Ein Messwiderstand kann sich außerdem über größere Abschnitte des verformbaren Elements hinweg erstrecken. Dann ist es möglich, mit dem Messwiderstand eine mittlere Temperatur des verformbaren Elements zu bestimmen. Der Temperatursensor kann auch mehrere Messwiderstände umfassen. Messwiderstände können in das verformbare Element integriert sein. Insbesondere ist es möglich, dass Messwiderstände als Einlagen in das verformbare Element eingegossen oder eingespritzt sind.

Hier auch beschrieben werden soll ein Kraftfahrzeug aufweisend eine Verbrennungskraftmaschine, eine Abgasbehandlungsvorrichtung zur Reinigung der Abgase der Verbrennungskraftmaschine sowie eine beschriebene Pumpe, wobei die Pumpe dazu eingerichtet ist, ein flüssiges Additiv zur Abgasreinigung aus einem Tank zu einem Injektor zu fördern, mit dem das flüssige Additiv der Abgasbehandlungsvorrichtung zugeführt werden kann.

Die im Rahmen des beschriebenen Verfahrens gewonnenen Temperaturinformationen können nicht nur für das beschriebene Verfahren verwendet werden. Zusätzlich ist es möglich, diese Informationen für eine OBD (On-Board-Diagnose) zu verwenden. Der Temperatursensor und die beschriebene Pumpe, sowie die im Rahmen des beschriebenen Verfahrens erfasste Temperatur, können beispielsweise auch verwendet werden um eine Notabschaltung der Pumpe zu gewährleisten. Beispielsweise kann die bestimmte Temperatur mit einer minimalen Grenztemperatur und/oder einer maximalen Grenztemperatur verglichen werden.

Bei einer Überschreitung der maximalen Grenztemperatur besteht die Gefahr einer Überhitzung der Pumpe. Wenn die Temperatur unter der minimalen Grenztemperatur liegt, besteht die Gefahr, dass Eiskristalle innerhalb der Pumpe vorliegen. Sowohl eine Überschreitung der maximalen Grenztemperatur als auch eine Unterschreitung der minimalen Grenztemperatur können eine Zerstörung der Pumpe bewirken.

Die Erfindung sowie das technische Umfeld werden nachfolgend anhand der Figur näher erläutert. Die Figuren zeigen besonders bevorzugte Ausführungsbeispiele, auf die die Erfindung jedoch nicht begrenzt ist. Es ist insbesondere darauf hinzuweisen, dass die Figuren und die in den Figuren dargestellten Größenverhältnisse nur schematisch sind. Es zeigen:
- Fig. 1:: eine dreidimensionale Ansicht einer beschriebenen Pumpe,
- Fig. 2:: einen Schnitt durch das verformbare Element einer beschriebenen Pumpe,
- Fig. 3:: einen Schnitt durch eine erste zweite Ausführungsvariante einer beschriebenen Pumpe,
- Fig. 4:: einen Schnitt durch eine zweite Ausführungsvariante einer beschriebenen Pumpe,
- Fig. 5:: einen Schnitt durch eine dritte Ausführungsvariante einer beschriebenen Pumpe,
- Fig. 6:: ein Ablaufdiagramm des beschriebenen Verfahrens, und
- Fig. 7:: ein Kraftfahrzeug aufweisend eine beschriebene Pumpe.

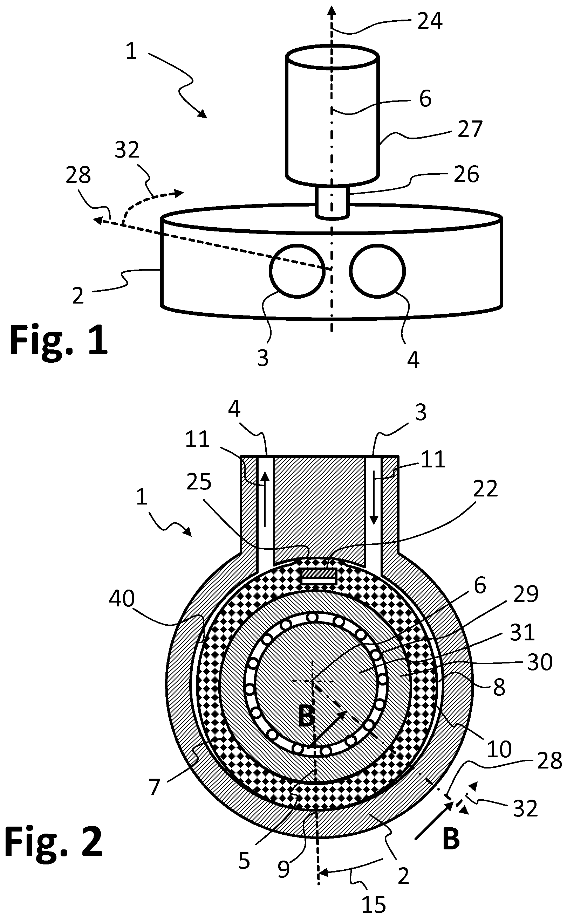

In Fig. 1 ist die Pumpe 1 in einer dreidimensionalen Ansicht dargestellt. Zu erkennen ist das Pumpengehäuse 2 sowie ein Koordinatensystem mit einer axialen Richtung 24 entlang der Achse 6, einer radialen Richtung 28, die senkrecht auf der Achse 6 und der axialen Richtung 24 steht, sowie einer Umfangsrichtung 32, die senkrecht auf der radialen Richtung 28 und tangential zu der Achse 6 bzw. der axialen Richtung 24 angeordnet ist. Dieses Koordinatensystem wird im Folgenden zur Beschreibung der räumlichen Anordnung der Komponenten der Pumpe 1 verwendet. An dem Pumpengehäuse 2 befindet sich ein Einlass 3 und ein Auslass 4. Innerhalb des Pumpengehäuses 2 ist der hier nicht dargestellte Exzenter angeordnet, der von einem Antrieb 27 über eine Antriebswelle 26 angetrieben wird. Die axiale Richtung 24 ist entlang einer Achse 6 ausgerichtet, in welcher sowohl das Pumpengehäuse 2 mit dem nicht dargestellten Exzenter als auch der Antrieb 27 angeordnet sind.

In Fig. 2 ist ein Schnitt durch das Pumpengehäuse 2 der Pumpe 1 abgebildet. In diesem Schnitt sind ebenfalls der Einlass 3 und der Auslass 4 zu erkennen. Innerhalb des Pumpengehäuses 2 ist der Exzenter 5 angeordnet. Der Exzenter 5 ist in einen inneren Exzenterbereich 29 und einen äußeren Lagerring 30 aufgeteilt, die voneinander durch ein Lager 31 getrennt sind. Wenn der Exzenterbereich 29 eine exzentrische Drehbewegung durchführt, wird diese Drehbewegung von dem Lager 31 in eine exzentrische Trommelbewegung des Lagerrings 30 umgesetzt. Zwischen dem Exzenter 5 und dem Pumpengehäuse 2 befinden sich das verformbare Element 7 sowie der Förderkanal 8. Abschnittsweise wird das verformbare Element 7 von dem Exzenter 5 gegen das Pumpengehäuse 2 gedrückt, so dass eine verschiebbare Abdichtung 9 ausgebildet ist. Durch die verschiebbare Abdichtung 9 wird innerhalb des Förderkanals 8 mindestens ein Pumpenvolumen 10 begrenzt. Durch eine Drehung des Exzenters 5 und eine Verschiebung der verschiebbaren Abdichtung 9 wird ebenfalls das Pumpenvolumen 10 verschoben, so dass eine Förderung von Flüssigkeit von dem Einlass 3 zu dem Auslass 4 mit einer Förderrichtung 11 stattfindet. In Fig. 2 ebenfalls zu erkennen sind die radiale Richtung 28 und die Umfangsrichtung 32. Die verschiebbare Abdichtung 9 hat, je nachdem wie der Exzenter 5 positioniert ist, eine Winkelposition 15. Diese Winkelposition 15 kann dazu verwendet werden, um die Genauigkeit der Förderung von Flüssigkeit mit der Pumpe 1 zu erhöhen, weil, je nachdem, wo sich die Winkelposition 15 der verschiebbaren Abdichtung 9 bzw. des Exzenters 5 befindet, die Fördermenge der Pumpe bei einer vorgegebenen Fortbewegung des Exzenters 5 um einen bestimmten Winkelabschnitt unterschiedlich ist.

Die Pumpe 1 weist außerdem zwischen dem Auslass 4 und dem Einlass 3 eine stationäre Abdichtung 25 auf, durch die eine Rückströmung von Flüssigkeit von dem Auslass 4 zu dem Einlass 3 durch die Pumpe verhindert wird. Die stationäre Abdichtung 25 ist in dem hier beschriebenen Ausführungsbeispiel dadurch realisiert, dass ein Stift 22 in das verformbare Element 7 eingelegt ist, welcher das verformbare Element 7 im Bereich der stationären Abdichtung 25 stationär gegen das Pumpengehäuse 2 drückt. Durch den Stift 22 ist das verformbare Element 7 an das Pumpengehäuse geklemmt. Es sind weitere Varianten von stationären Abdichtungen 25 denkbar. Beispielsweise kann das verformbare Element 7 im Bereich der stationären Abdichtung 25 an das Pumpengehäuse 2 angeklebt sein.

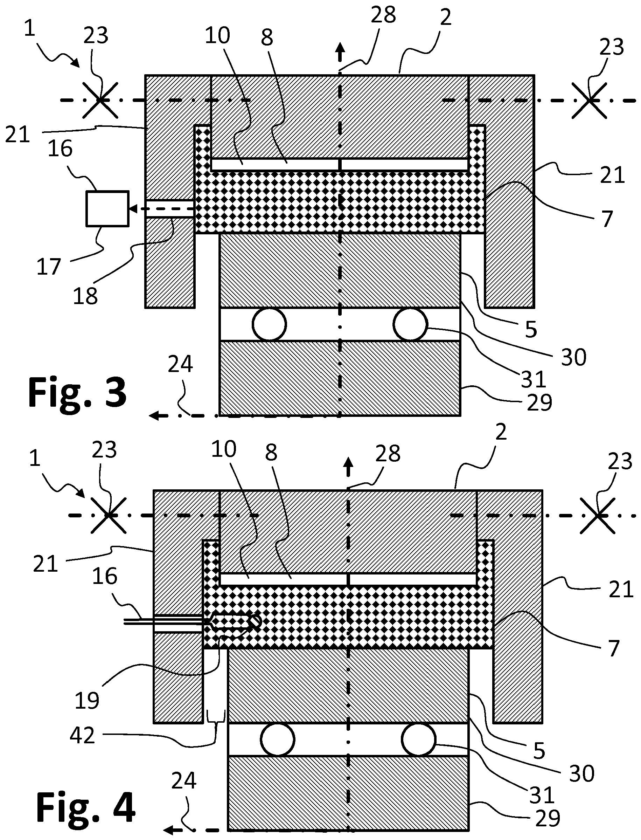

Die Fig. 3 bis 5 zeigen den mit B-B markierten Querschnitt aus Fig. 2 von drei verschiedenen Ausführungsvarianten einer beschriebenen Pumpe 1. Zu erkennen ist jeweils das Pumpengehäuse 2, der Exzenter 5 mit dem Exzenterbereich 29, dem Lagerring 30 und dem Lager 31 sowie das verformbar Element 7 zwischen dem Pumpengehäuse 2 und dem Exzenter 5. Das Pumpengehäuse 2 weist beidseitig jeweils einen Gegenhalter 21 auf, wobei beide Gegenhalter 21 das verformbare Element 7 umschließen und axial abdichten. Beispielhaft ist in den Figuren dargestellt, dass die Gegenhalter 21 mit Hilfe von Schrauben 23 an einem Hauptbauteil des Pumpengehäuses 2 befestigt sind. Durch diese Schrauben 23 kann gleichzeitig auch eine Verspannung und Abdichtung des verformbaren Elements 7 an dem Pumpengehäuse 2 realisiert sein. Zu erkennen sind in den Fig. 3, 4 und 5 auch die axiale Richtung 24 und die radiale Richtung 28. Zwischen dem verformbaren Element 7 und dem Pumpengehäuse 2 befindet sich jeweils der Förderkanal 8 mit einem Pumpenvolumen 10.

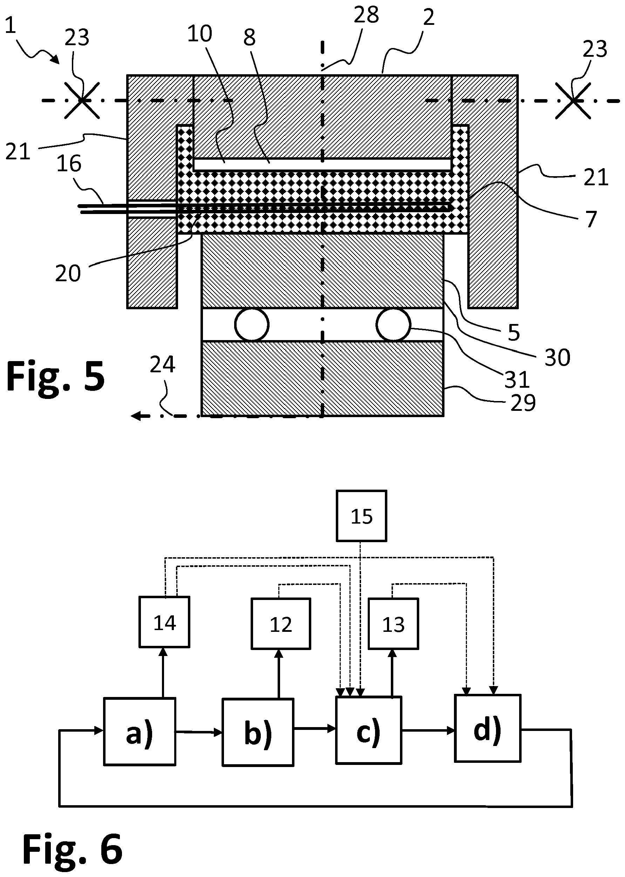

Gemäß Fig. 3 existiert ein Temperatursensor 16, der als Infrarotsensor 17 ausgeführt ist und die Temperatur des verformbaren Elements 7 durch einen Strahlungskanal 18 messen kann, der in dem Pumpengehäuse 2 ausgebildet ist. In Fig. 3 ist auch ein Spalt 41 zwischen dem Pumpengehäuse 2 und dem Exzenter 5 dargestellt. In einer weiteren Ausführungsvariante der Pumpe 1 kann der Strahlungskanal 18 auch durch diesen Spalt 41 verlaufen. Gemäß Fig. 4 existiert als Temperatursensor 16 ein Thermoelement 19, das mit dem verformbaren Element 7 in Kontakt ist. Die Fig. 5 zeigt als Temperatursensor 16 einen Messwiderstand 20, der sich durch das verformbare Element 7 hindurch erstreckt.

Fig. 6 verdeutlicht den Ablauf des beschriebenen Verfahrens mit den Verfahrensschritten a), b), c) und d). In Schritt a) wird eine Flüssigkeitsmenge 14 bestimmt, die mit der Pumpe gefördert werden soll. In Schritt b) wird eine Temperatur 12 bestimmt, die das verformbare Element hat. Die Information über die Flüssigkeitsmenge 14 und die Information über die Temperatur 12 werden in Schritt c) verwendet, um den Parameter 13 zu bestimmen. Zusätzlich kann in Schritt c) auch noch eine Winkelposition 15 des Exzenters verwendet werden, um den Parameter 13 zu bestimmen. In Schritt c) kann dazu ein in einem Steuergerät hinterlegtes Kennfeld verwendet werden. In Schritt d) werden die festgelegte Flüssigkeitsmenge 14 und der Parameter 13 verwendet, um die Fördereinheit entsprechend zu beschreiben und Flüssigkeit zu fördern.

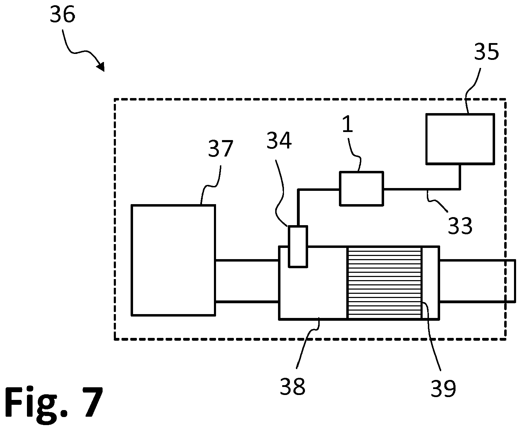

Fig. 7 zeigt ein Kraftfahrzeug 36 aufweisend eine Verbrennungskraftmaschine 37 und eine Abgasbehandlungsvorrichtung 38 zur Reinigung der Abgase der Verbrennungskraftmaschine 37. Innerhalb der Abgasbehandlungsvorrichtung 38 ist ein SCR-Katalysator 39 zur Durchführung des Verfahrens der selektiven katalytischen Reduktion angeordnet. Der Abgasbehandlungsvorrichtung 38 kann flüssiges Additiv mit Hilfe eines Injektors 34 zugeführt werden. Der Injektor 34 wird über eine Leitung 33 mit flüssigem Additiv aus einem Tank 35 versorgt. Dies geschieht mit Hilfe einer Pumpe 1.

### Bezugszeichenliste

- 1: Pumpe
- 2: Pumpengehäuse
- 3: Einlass
- 4: Auslass
- 5: Exzenter
- 6: Achse
- 7: verformbares Element
- 8: Förderkanal
- 9: verschiebbare Abdichtung
- 10: Pumpenvolumen
- 11: Förderrichtung
- 12: Temperatur
- 13: Parameter
- 14: Flüssigkeitsmenge
- 15: Winkelposition
- 16: Temperatursensor
- 17: Infrarotsensor
- 18: Strahlungskanal
- 19: Thermoelement
- 20: Messwiderstand
- 21: Gegenhalter
- 22: Stift
- 23: Schraube
- 24: axiale Richtung
- 25: stationäre Abdichtung
- 26: Antriebswelle
- 27: Antrieb
- 28: radiale Richtung
- 29: Exzenterbereich
- 30: Lagerring
- 31: Lager
- 32: Umfangsrichtung
- 33: Leitung
- 34: Injektor
- 35: Tank
- 36: Kraftfahrzeug
- 37: Verbrennungskraftmaschine
- 38: Abgasbehandlungsvorrichtung
- 39: SCR-Katalysator
- 40: Umfangsfläche
- 41: Spalt

## Patentansprüche

1. Verfahren zum Betrieb einer Pumpe (1) zur Förderung einer Flüssigkeit aufweisend zumindest ein Pumpengehäuse (2) mit mindestens einem Einlass (3) und mindestens einem Auslass (4), wobei an dem Pumpengehäuse (2) ein Exzenter (5) angeordnet ist, der um eine Achse (6) relativ zu dem Pumpengehäuse (2) drehbar ist, wobei zwischen dem Pumpengehäuse (2) und dem Exzenter (5) ein verformbares Element (7) angeordnet ist und wobei mit dem verformbaren Element (7) und dem Pumpengehäuses (2) ein Förderkanal (8) von dem mindestens einen Einlass (3) zu dem mindestens einen Auslass (4) ausgebildet ist und wobei weiter das verformbare Element (7) von dem Exzenter (5) abschnittsweise derart gegen das Pumpengehäuse (2) gedrückt wird, dass mindestens eine verschiebbare Abdichtung (9) des Förderkanal (8) und zumindest ein geschlossenes Pumpenvolumen (10) in dem Förderkanal (8) ausgebildet sind, welche zur Förderung der Flüssigkeit durch eine Drehbewegung des Exzenters (5) entlang des Förderkanals (8) von dem Einlass (3) zu dem Auslass (4) verschiebbar sind und das Verfahren zumindest die folgenden Schritte umfasst:
a) Festlegen einer Flüssigkeitsmenge (14), die mit der Pumpe (1) gefördert werden soll,
b) Bestimmen einer Temperatur (12) des verformbaren Elementes (7),
c) Bestimmen mindestens eines Parameters (13) unter Berücksichtigung der Temperatur (12) aus Schritt b), wobei der Parameter (13) eine Abhängigkeit zwischen der Bewegung des Exzenters (5) und der Förderleistung der Pumpe (1) wiedergibt,
d) Fördern der in Schritt a) festgelegten Flüssigkeitsmenge (14), wobei eine Betriebsweise der Pumpe (1) unter Berücksichtigung des Parameters (13) aus Schritt c) angepasst wird.

2. Verfahren nach Patentanspruch 1, wobei vor Schritt c) eine Winkelposition (15) des Exzenters (5) ermittelt und diese Winkelposition (15) bei der Bestimmung des mindestens einen Parameters (13) in Schritt c) berücksichtigt wird.

3. Verfahren nach einem der vorhergehenden Patentansprüche, wobei bei der Bestimmung des mindestens einen Parameters (13) in Schritt c) die in Schritt a) festgelegte Flüssigkeitsmenge (14) berücksichtigt wird.

4. Verfahren nach einem der vorhergehenden Patentansprüche, wobei die Temperatur (12) des verformbaren Elementes (7) in Schritt b) mit einem Energiemodell berechnet wird.

5. Pumpe (1) zur Förderung einer Flüssigkeit, eingerichtet zur Durchführung des Verfahrens nach einem der vorhergehenden Patentansprüche, aufweisend zumindest ein Pumpengehäuse (2) mit mindestens einem Einlass (3) und mindestens einem Auslass (4), wobei an dem Pumpengehäuse (2) ein Exzenter (5) angeordnet ist, der um eine Achse (6) relativ zu dem Pumpengehäuse (2) drehbar ist, wobei zwischen dem Pumpengehäuse (2) und dem Exzenter (5) ein verformbares Element (7) angeordnet ist und wobei mit dem verformbaren Element (7) und einer zylindrischen Umfangsfläche (40) des Pumpengehäuses (2) ein Förderkanal (8) von dem mindestens einen Einlass (3) zu dem mindestens einen Auslass (4) ausgebildet ist und wobei weiter das verformbare Element (7) von dem Exzenter (5) abschnittsweise derart gegen das Pumpengehäuse (2) gedrückt wird, so dass mindestens eine verschiebbare Abdichtung (9) des Förderkanal (8) und zumindest ein geschlossenes Pumpenvolumen (10) in dem Förderkanal (8) ausgebildet sind, die zur Förderung der Flüssigkeit durch eine Drehbewegung des Exzenters (5) entlang des Förderkanals (8) von dem Einlass (3) zu dem Auslass (4) verschiebbar sind, **dadurch gekennzeichnet, dass** die Pumpe zumindest einen Temperatursensor (16) zur Bestimmung der Temperatur (12) des verformbaren Elements (7) in Schritt b) aufweist.

6. Pumpe (1) nach Patentanspruch 5, wobei der mindestens eine Temperatursensor (16) einen Infrarotsensor (17) umfasst, der eine von dem verformbaren Element (7) ausgehende Wärmestrahlung erfasst.

7. Pumpe (1) nach Patentanspruch 6, wobei durch das Pumpengehäuse (2) ein Strahlungskanal (18) verläuft, entlang welchem die Wärmestrahlung von dem verformbaren Element (7) zu dem Infrarotsensor (17) gelangt.

8. Pumpe (1) nach Patentanspruch 5, wobei der mindestens eine Temperatursensor (16) ein Thermoelement (19) umfasst, das mit dem verformbaren Element (7) in Kontakt ist.

9. Pumpe (1) nach Patentanspruch 5, wobei der mindestens eine Temperatursensor (16) einen Messwiderstand (20) umfasst.

10. Kraftfahrzeug (36), aufweisend eine Verbrennungskraftmaschine (37), eine Abgasbehandlungsvorrichtung (38) zur Reinigung der Abgase der Verbrennungskraftmaschine (37), sowie eine Pumpe (1) nach einem der Patentansprüche 5 bis 9, wobei die Pumpe (1) dazu eingerichtet ist, ein flüssiges Additiv zur Abgasreinigung aus einem Tank (35) zu einem Injektor (34) zu fördern, mit dem das flüssige Additiv der Abgasbehandlungsvorrichtung (38) zugeführt werden kann.

## Claims

1. Method for operating a pump (1) for conveying a liquid, having at least one pump housing (2) with at least one inlet (3) and at least one outlet (4), an eccentric (5) being arranged on the pump housing (2), which eccentric (5) can be rotated about an axis (6) relative to the pump housing (2), a deformable element (7) being arranged between the pump housing (2) and the eccentric (5), and a delivery channel (8) from the at least one inlet (3) to the at least one outlet (4) being configured by way of the deformable element (7) and the pump housing (2), and, furthermore, the deformable element (7) being pressed by the eccentric (5) in sections against the pump housing (2) in such a way that at least one displaceable seal (9) of the delivery channel (8) and at least one closed pump volume (10) in the delivery channel (8) are formed, which, in order to deliver the liquid, can be displaced by way of a rotational movement of the eccentric (5) along the delivery channel (8) from the inlet (3) to the outlet (4), and the method comprising at least the following steps:
a) fixing of a liquid quantity (14) which is to be delivered by way of the pump (1),
b) determining of a temperature (12) of the deformable element (7),
c) determining of at least one parameter (13) taking the temperature (12) from step b) into consideration, the parameter (13) reflecting a dependence between the movement of the eccentric (5) and the delivery capacity of the pump (1),
d) delivering the liquid quantity (14) which is fixed in step a), a method of operation of the pump (1) being adapted with consideration of the parameter (13) from step c).

2. Method according to Patent Claim 1, an angular position (15) of the eccentric (5) being determined before step c), and said angular position (15) being taken into consideration during the determination of the at least one parameter (13) in step c).

3. Method according to either of the preceding patent claims, the liquid quantity (14) which is fixed in step a) being taken into consideration during the determination of the at least one parameter (13) in step c).

4. Method according to one of the preceding patent claims, the temperature (12) of the deformable element (7) in step b) being calculated by way of an energy model.

5. Pump (1) for delivering a liquid, set up to carry out the method according to one of the preceding patent claims, having at least one pump housing (2) with at least one inlet (3) and at least one outlet (4), an eccentric (5) being arranged on the pump housing (2), which eccentric (5) can be rotated about an axis (6) relative to the pump housing (2), a deformable element (7) being arranged between the pump housing (2) and the eccentric (5), and a delivery channel (8) from the at least one inlet (3) to the at least one outlet (4) being configured by way of the deformable element (7) and a cylindrical circumferential face (40) of the pump housing (2), and, furthermore, the deformable element (7) being pressed by the eccentric (5) in sections against the pump housing (2) in such a way that at least one displaceable seal (9) of the delivery channel (8) and at least one closed pump volume (10) in the delivery channel (8) are formed, which, in order to deliver the liquid, can be displaced by way of a rotational movement of the eccentric (5) along the delivery channel (8) from the inlet (3) to the outlet (4), **characterized in that** the pump has at least one temperature sensor (16) for determining the temperature (12) of the deformable element (7) in step b).

6. Pump (1) according to Patent Claim 5, the at least one temperature sensor (16) comprising an infrared sensor (17) which detects thermal radiation which emanates from the deformable element (7).

7. Pump (1) according to Patent Claim 6, a radiation channel (18) running through the pump housing (2), along which radiation channel (18) the thermal radiation passes from the deformable element (7) to the infrared sensor (17).

8. Pump (1) according to Patent Claim 5, the at least one temperature sensor (16) comprising a thermocouple (19) which is in contact with the deformable element (7).

9. Pump (1) according to Patent Claim 5, the at least one temperature sensor (16) comprising a measuring resistor (20).

10. Motor vehicle (36), having an internal combustion engine (37), an exhaust gas treatment apparatus (38) for purifying the exhaust gases of the internal combustion engine (37), and a pump (1) according to one of Patent Claims 5 to 9, the pump (1) being set up to deliver a liquid additive for exhaust gas purification from a tank (35) to an injector (34), by way of which the liquid additive can be fed to the exhaust gas treatment apparatus (38).

## Revendications

1. Procédé pour faire fonctionner une pompe (1) pour refouler un liquide, présentant au moins un boîtier de pompe (2) avec au moins une entrée (3) et au moins une sortie (4), un excentrique (5) étant disposé au niveau du boîtier de pompe (2), lequel peut tourner autour d'un axe (6) par rapport au boîtier de pompe (2), un élément déformable (7) étant disposé entre le boîtier de pompe (2) et l'excentrique (5) et un canal de refoulement (8) allant de l'au moins une entrée (3) à l'au moins une sortie (4) étant réalisé avec l'élément déformable (7) et le boîtier de pompe (2) et en outre l'élément déformable (7) étant en partie pressé par l'excentrique (5) contre le boîtier de pompe (2) de telle sorte qu'au moins une étanchéité mobile (9) du canal de refoulement (8) et au moins un volume de pompe fermé (10) soient réalisés dans le canal de refoulement (8), lesquels peuvent être déplacés pour le refoulement du liquide par un déplacement en rotation de l'excentrique (5) le long du canal de refoulement (8) depuis l'entrée (3) vers la sortie (4), et le procédé comprenant au moins les étapes suivantes :
a) fixation d'une quantité de liquide (14) devant être refoulée par la pompe (1),
b) détermination d'une température (12) de l'élément déformable (7),
c) détermination d'au moins un paramètre (13) en tenant compte de la température (12) de l'étape b), le paramètre (13) fournissant une dépendance entre le déplacement de l'excentrique (5) et la puissance de refoulement de la pompe (1),
d) refoulement de la quantité de liquide (14) fixée à l'étape a), un mode de fonctionnement de la pompe (1) étant adapté en tenant compte du paramètre (13) de l'étape c).

2. Procédé selon la revendication 1, dans lequel, avant l'étape c), une position angulaire (15) de l'excentrique (5) est déterminée et cette position angulaire (15) est prise en compte lors de la détermination de l'au moins un paramètre (13) à l'étape c).

3. Procédé selon l'une quelconque des revendications précédentes, dans lequel, lors de la détermination de l'au moins un paramètre (13) à l'étape c), la quantité de liquide (14) fixée à l'étape a) est prise en compte.

4. Procédé selon l'une quelconque des revendications précédentes, dans lequel la température (12) de l'élément déformable (7) est calculée à l'étape b) avec un modèle énergétique.

5. Pompe (1) pour refouler un liquide, prévue pour mettre en oeuvre le procédé selon l'une quelconque des revendications précédentes, présentant au moins un boîtier de pompe (2) avec au moins une entrée (3) et au moins une sortie (4), un excentrique (5) étant disposé au niveau du boîtier de pompe (2), lequel peut tourner autour d'un axe (6) par rapport au boîtier de pompe (2), un élément déformable (7) étant disposé entre le boîtier de pompe (2) et l'excentrique (5) et un canal de refoulement (8) allant de l'au moins une entrée (3) à l'au moins une sortie (4) étant réalisé avec l'élément déformable (7) et une surface périphérique cylindrique (40) du boîtier de pompe (2), et en outre l'élément déformable (7) étant pressé en partie par l'excentrique (5) contre le boîtier de pompe (2) de telle sorte qu'au moins une étanchéité mobile (9) du canal de refoulement (8) et au moins un volume de pompe fermé (10) soient réalisés dans le canal de refoulement (8), lesquels peuvent être déplacés pour refouler le liquide par un déplacement en rotation de l'excentrique (5) le long du canal de refoulement (8) depuis l'entrée (3) vers la sortie (4), **caractérisé en ce que** la pompe présente au moins un capteur de température (16) pour déterminer la température (12) de l'élément déformable (7) à l'étape b).

6. Pompe (1) selon la revendication 5, dans laquelle l'au moins un capteur de température (16) comprend un capteur infrarouge (17) qui détecte un rayonnement thermique issu de l'élément déformable (7).

7. Pompe (1) selon la revendication 6, dans laquelle un canal de rayonnement (18) s'étend à travers le boîtier de pompe (2), le long duquel le rayonnement thermique parvient de l'élément déformable (7) au capteur infrarouge (17).

8. Pompe (1) selon la revendication 5, dans laquelle l'au moins un capteur de température (16) comprend un élément thermique (19) qui est en contact avec l'élément déformable (7).

9. Pompe (1) selon la revendication 5, dans laquelle l'au moins un capteur de température (16) comprend une résistance de mesure (20).

10. Véhicule automobile (36) présentant un moteur à combustion interne (37), un dispositif de traitement des gaz d'échappement (38) pour purifier les gaz d'échappement du moteur à combustion interne (37), ainsi qu'une pompe (1) selon l'une quelconque des revendications 5 à 9, la pompe (1) étant prévue pour refouler un additif liquide pour la purification des gaz d'échappement hors d'un réservoir (35) vers un injecteur (34), avec lequel l'additif liquide peut être acheminé au dispositif de traitement des gaz d'échappement (38).
